# EUROPEAN PATENT SPECIFICATION

(11) **EP 4 130 650 B1**
(45) Date of publication and mention of the grant of the patent: **21.01.2026**
(21) Application number: 21774534.8
(22) Date of filing: 19.03.2021
(51) Int. Cl.: G01B 11/16, G01D 5/353, G01D 11/30, G01K 11/32, G01M 5/00, G01M 11/08, G02B 6/12

(54) **OPTICAL-FIBER-EMBEDDING SHEET, METHOD FOR PLACING OPTICAL FIBER, AND APPLICATION DEVICE**
BLATT MIT EINGEBETTETER OPTISCHER FASER, VERFAHREN ZUM VERLEGEN EINER OPTISCHEN FASER UND AUFBRINGVORRICHTUNG
FEUILLE INTÉGRANT UNE FIBRE OPTIQUE, PROCÉDÉ DE POSE D'UNE FIBRE OPTIQUE ET DISPOSITIF D'APPLICATION

(30) Priority: 23.03.2020 JP 2020051024
(43) Date of publication of application: 08.02.2023
(73) Proprietor: NITTO DENKO CORPORATION, Ibaraki-shi Osaka 567-8680 (JP)
(72) Inventor: SOGABE, Naoki, Tokyo 107-8388 (JP); IMAI, Michio, Tokyo 107-8388 (JP); TAIRA, Yohei, Tokyo 107-8388 (JP); TANAKA, Akiko, Ibaraki-shi, Osaka 567-8680 (JP); MISHIMA, Takehiko, Ibaraki-shi, Osaka 567-8680 (JP); HAMADA, Chie, Ibaraki-shi, Osaka 567-8680 (JP)
(74) Representative: Müller-Boré & Partner Patentanwälte PartG mbB
(86) International application number: PCT/JP2021/011523
(87) International publication number: WO 2021/193472

(56) References cited:
- EP-A1- 2 367 036
- JP-A- 2001 227 994
- JP-A- 2002 327 042
- JP-A- 2013 156 200
- JP-A- 2017 072 801
- JP-A- H07 149 323
- JP-A- H07 217 225
- KR-A- 20110 032 127

## Description

### TECHNICAL FIELD

The present invention relates to an optical-fiber-embedding sheet, which is a sheet into which an optical fiber has been incorporated, a method for placing an optical fiber, and an application device for use in applying the optical-fiber-embedding sheet in the method.

### BACKGROUND ART

An optical fiber has such a property that a strain distribution or a temperature distribution over the entire length of the optical fiber can be determined by causing pulsed light from a laser to enter the optical fiber and analyzing the resultant scattered light, etc.

Optical-fiber sensors for detecting a deformation of a structure or measuring the temperature thereof, by utilizing that property, have now been put into practical use. For example, Patent Document 1 describes an example in which a sensor including an optical fiber fixed between sheets is applied with an adhesive to a surface of a concrete structure in order to detect a deformation (damage) of the concrete structure by determining a strain of the optical fiber. Patent Document 2 describes an example in which an optical-fiber sensor including an optical fiber fixed to a member for placement is bonded to a structure with a bonding material provided to the member for placement and a deformation of the structure is detected from a strain of the optical fiber.

### CITATION LIST

### PATENT LITERATURE

[Patent Document 1] JP-A-2002-131025
[Patent Document 2] JP-A-2002-48516

### SUMMARY OF INVENTION

### TECHNICAL PROBLEMS

In the case where an optical fiber is directly applied with an adhesive to a placement object, it is necessary to perform operations such as applying the adhesive and wiring, placing, and fixing the optical fiber, and these operations often require a plurality of persons.

Meanwhile, for ensuring measurement accuracy, it is necessary to apply an optical fiber while introducing a certain initial tension thereinto. The placement operation hence requires labor, and there is the risk of damaging the optical fiber because it is glassy and thin.

Furthermore, depending on placement objects on which an optical fiber is to be placed, there are cases where the operation space is limited or it is necessary to attach the optical fiber to a lower surface or side surface of the placement object. In such cases, more labor is required for the placement operation.

Meanwhile, in Patent Document 1, an optical fiber is fixed between sheets, and in Patent Document 2, an optical fiber is fixed to a sheet-shaped member for placement. These prior-art techniques are intended to lessen the labor required for the placement operation, by applying the sheets or the member for placement to the placement object. However, production of these sensors is costly and there also is a possibility that since a sheet or the member for placement lies between the placement object and the optical fiber, a deformation or any change of the placement object is less apt to be reflected in the results of an examination with the sensor.

An object of the present invention, which has been achieved in view of those problems, is to provide an optical-fiber-embedding sheet, etc. which can lessen labor required for an operation for optical-fiber placement and with which sensing can be favorably conducted at low cost.

### SOLUTION TO THE PROBLEMS

A first aspect of the present invention for accomplishing the object is an optical-fiber-embedding sheet which is a sheet into which an optical fiber for use as a sensor has been incorporated, including a base material and an adhesive layer formed thereover which is to be bonded to a placement object where the optical fiber is to be placed, the optical fiber having been embedded in the adhesive layer, wherein the optical-fiber-embedding sheet includes a protective layer disposed between the base material and the adhesive layer.

By bonding the optical-fiber-embedding sheet according to the first aspect of the present invention to a placement object for the optical fiber by means of the adhesive layer, labor required for an operation for optical-fiber placement can be lessened. Furthermore, the base material and adhesive layer of the optical-fiber-embedding sheet can function as protective layers for the optical fiber to reduce a risk that the optical fiber is damaged by external contacts.

Moreover, since the optical fiber has been embedded in the adhesive layer, any sheet or the like does not come between the optical fiber and the placement object. Hence, a deformation or any change of the placement object is apt to be reflected in the results of an examination with the optical fiber. In addition, the layer configuration is simple and is less costly.

By disposing a protective layer between the base material and the adhesive layer according to the first aspect of the present invention, the optical fiber can be protected against external contacts, i.e., contacts from the base-material side. The risk of damaging the optical fiber can hence be further reduced.

It is desirable that a wire for sheet tearing is provided to the adhesive layer

By tearing the optical-fiber-embedding sheet using the wire, the optical fiber can be easily taken out. This facilitates, for example, the operation of connecting the optical fiber to a measuring instrument.

A second aspect of the present invention is a method for placing an optical fiber, characterized by applying the optical-fiber-embedding sheet according to the first aspect of the present invention to the placement object by means of the adhesive layer.

The second aspect of the invention is a method for optical-fiber placement in which the optical-fiber-embedding sheet according to the first aspect of the invention is used.

It is desirable that a primer for curing the adhesive layer by a chemical reaction with the adhesive layer is applied to the placement object before the optical-fiber-embedding sheet is applied to a portion of the placement object to which the primer has been applied.

By curing the adhesive layer, which contains the optical fiber embedded therein, by a reaction with the primer, the optical fiber is more highly integrated with the placement object.

It is desirable to use an application device which includes a reel having the optical-fiber-embedding sheet wound thereon and a press roller and to apply the optical-fiber-embedding sheet by unwinding the optical-fiber-embedding sheet from the reel and moving the application device in a direction along which the optical-fiber-embedding sheet is applied, while pressing the unwound optical-fiber-embedding sheet against the placement object with the press roller.

The use of the application device further facilitates the operation of applying the optical-fiber-embedding sheet and improves the application accuracy. In addition, the application can be carried out while a certain initial tension is being given to the optical fiber by the rotational resistance of the reel. It is hence possible to introduce a certain initial strain into the optical fiber throughout its entire length to prevent examination results from fluctuating.

A third aspect of the present invention is an application device for applying the optical-fiber-embedding sheet according to the first aspect of the present invention to the placement object, characterized by including a reel having the optical-fiber-embedding sheet wound thereon and a press roller for pressing the optical-fiber-embedding sheet unwound from the reel against the placement object.

The third aspect of the invention is an application device suitable for the operation of optical-fiber placement in which the optical-fiber-embedding sheet according to the first aspect of the invention is used.

### ADVANTAGEOUS EFFECTS OF INVENTION

The present invention can provide an optical-fiber-embedding sheet, etc. which can lessen labor required for an operation for optical-fiber placement and with which sensing can be favorably conducted at low cost.

### BRIEF DESCRIPTION OF DRAWINGS

[Fig. 1] In Fig. 1, (a) and (b) are views illustrating an optical-fiber-embedding sheet 1.
[Fig. 2] In Fig. 2, (a) and (b) are views illustrating a method for placing an optical fiber 13.
[Fig. 3] In Fig. 3, (a) to (c) are views illustrating a method for placing an optical fiber 13.
[Fig. 4] Fig. 4 is a view illustrating an application device 5a.
[Fig. 5] Fig. 5 is a view illustrating a method for placing an optical fiber 13.
[Fig. 6] Fig. 6 is graphs showing results of strain measurements.
[Fig. 7] In Fig. 7, (a) and (b) are cross-sectional views each illustrating a crack portion 31 and its vicinity of a placement object 3.
[Fig. 8] In Fig. 8, (a) and (b) are views respectively illustrating optical-fiber-embedding sheets 1a and 1b.
[Fig. 9] In Fig. 9, (a) and (b) are views illustrating an optical-fiber-embedding sheet 1c.
[Fig. 10] In Fig. 10, (a) and (b) are views respectively illustrating optical-fiber-embedding sheets 1d and 1e.

### DESCRIPTION OF EMBODIMENTS

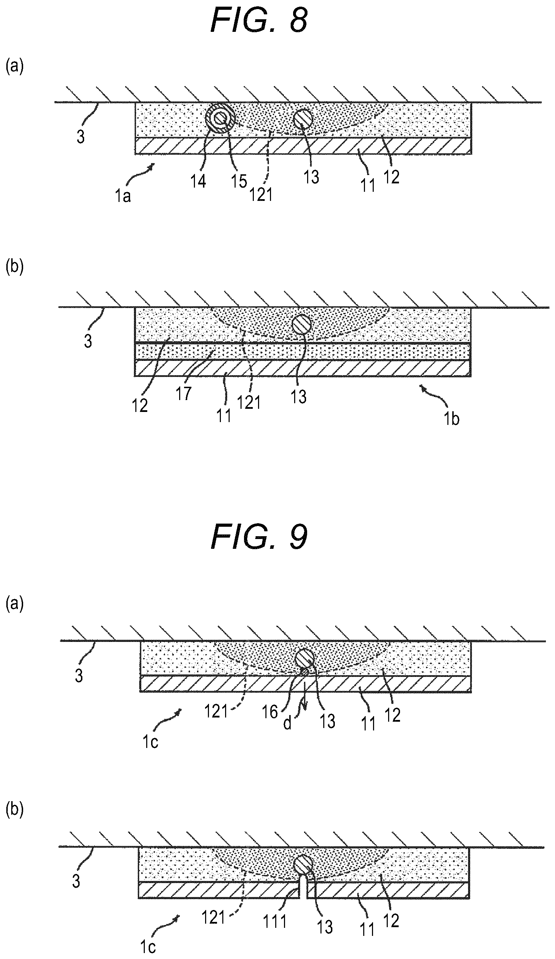

Preferred embodiments of the present invention are described in detail below on the basis of the drawings, wherein, although they may be referred to as "embodiment(s) of the present invention", only the embodiment of Fig. 8 (b) is encompassed by the scope of the claims, as the other embodiments do not have the protective layer disposed between the base material and the adhesive layer, as required by the claims.

### (1. Optical-Fiber-Embedding Sheet 1)

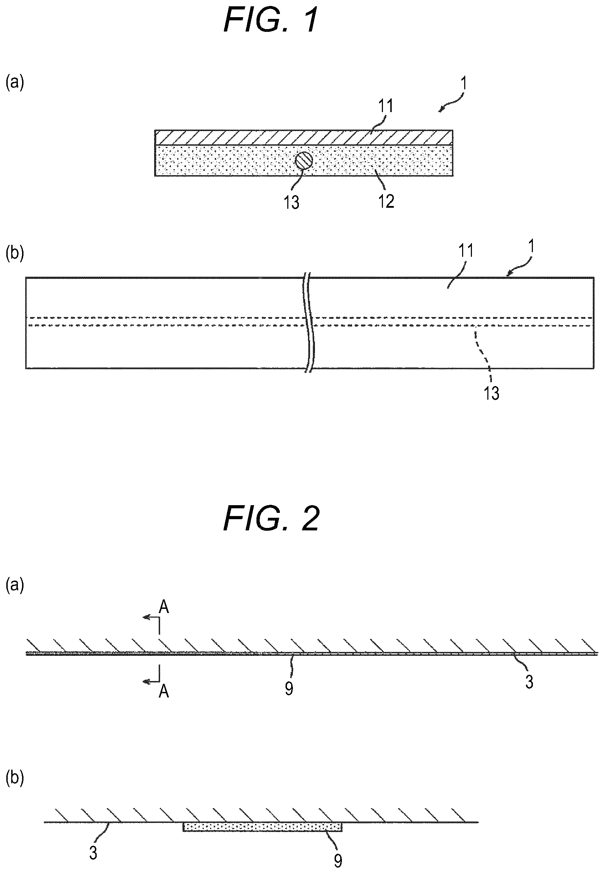

Fig. 1 is views illustrating an optical-fiber-embedding sheet 1 according to an embodiment of the present invention. The optical-fiber-embedding sheet 1 is a strip-shaped sheet material into which an optical fiber 13 to be used as a sensor has been incorporated. This embodiment is intended to be used for detecting a deformation of a placement object for the optical fiber 13 on the basis of a strain of the optical fiber 13.

In Fig. 1, (a) is a view of a cross-section of the optical-fiber-embedding sheet 1 which is orthogonal to the longitudinal direction of the optical-fiber-embedding sheet 1, and in Fig. 1, (b) is a view of the optical-fiber-embedding sheet 1 viewed from above (a) of Fig. 1.

As shown in (a) of Fig. 1, the optical-fiber-embedding sheet 1 has a configuration composed of a base material 11 and an adhesive layer 12 formed thereon, and an optical fiber 13 has been embedded in the adhesive layer 12.

As the base material 11, a known resin sheet or the like can be used.

In the case where the optical-fiber-embedding sheet 1 is to be used in environments where it is exposed to sunlight, such as outdoor environments, it is preferred to use a material having ultraviolet resistance as the base material 11. The ultraviolet-resistant material can prevent the optical-fiber-embedding sheet 1 from being deteriorated by sunlight.

In the case where the optical-fiber-embedding sheet 1 is to be used in environments where it is in contact with concreate, as in use in concrete, it is preferred to use a material having alkali resistance as the base material 11. The alkali-resistant material can prevent the optical-fiber-embedding sheet 1 from being deteriorated by an alkali component of the concrete.

The adhesive layer 12 is a layer to be bonded to a placement object where the optical fiber 13 is to be placed, and has been provided to one surface of the base material 11 over the entire width of the base material 11. The term "width" means the length of the sheet along a direction which, in the plane of the sheet, is orthogonal to the longitudinal direction of the optical-fiber-embedding sheet 1, and the width corresponds to the length of the sheet along the right-hand/left-hand direction in (a) of Fig. 1.

A known pressure-sensitive adhesive can be used as the adhesive layer 12. In this embodiment, a material that cures upon chemical reaction with the primer, which will be described later, is used, among such known materials, as the adhesive layer 12.

In the case where the placement object for the optical fiber 13 is a concrete member, it is preferred to use a material having alkali resistance as the adhesive layer 12. The alkali-resistant material can prevent the optical-fiber-embedding sheet 1 from being deteriorated by an alkali component of the concrete.

The optical fiber 13 is a linear member constituted by a glass, etc. A known fiber member for use as a sensor can be used as the optical fiber 13. The optical fiber 13 has been disposed so that the longitudinal direction thereof coincides with the longitudinal direction of the optical-fiber-embedding sheet 1.

The optical-fiber-embedding sheet 1 and the base material 11, adhesive layer 12, etc. which constitute the sheet 1 are each not particularly limited in the shape, thickness, width, etc. thereof.

For example, the width of the optical-fiber-embedding sheet 1 is preferably 1 cm or larger from the standpoint of improving the adhesiveness of the optical-fiber-embedding sheet 1. Meanwhile, from the standpoint of ensuring handleability, the width thereof is preferably 10 cm or less. However, the width of the optical-fiber-embedding sheet 1 is not limited to that range.

### (2. Method for placing Optical Fiber 13)

Next, a method for placing the optical fiber 13 using the optical-fiber-embedding sheet 1 is explained.

In this embodiment, the optical-fiber-embedding sheet 1 is applied to a placement object for the optical fiber 13, thereby placing the optical fiber 13. The placement object is, for example, a concrete member, a steel member, or the like which constitutes a column, beam, crossbeam, floor, wall, etc. of a structure. However, the placement object is not particularly limited.

In this embodiment, in preparation for the placement of the optical fiber 13, a primer 9 is first applied to a surface of the placement object on which the optical fiber 13 is to be placed, as shown in Fig. 2. In this embodiment, the optical fiber 13 is placed on a lower surface of the placement object 3 and the primer 9 is applied to the lower surface. However, the surface on which the optical fiber 13 is to be placed (the surface to which the primer 9 is applied) is not particularly limited.

The primer 9 is applied to a strip-shaped area according to the portion where the optical-fiber-embedding sheet 1 is to be applied. In Fig. 2, (a) shows a cross-section of the portion to which the primer 9 has been applied, viewed along the longitudinal direction thereof, and in Fig. 2, (b) shows a cross-section along line A-A of (a) of Fig. 2.

As stated above, a material which cures the adhesive layer 12 by a chemical reaction with the adhesive layer 12 is used in this embodiment as the primer 9. It is preferred to use an epoxy-resin hardener as the primer 9. Although the hardener is not particularly limited, examples thereof include amine compounds, thiol compounds, and imidazole compounds.

The adhesive layer 12 preferably includes an epoxy resin. The adhesive layer 12 may include any of other resins such as acrylic resins, urethane resins, and polyester resins.

The materials mentioned above are mere examples, and material combinations for the primer 9 and adhesive layer 12 are not particularly limited so long as the adhesive layer 12 can be cured by a chemical reaction between the primer 9 and the adhesive layer 12. The kind of the chemical reaction also is not particularly limited.

After the primer 9 has been thus applied, the optical-fiber-embedding sheet 1 is applied to the placement object 3 by means of the adhesive layer 12. The optical-fiber-embedding sheet 1 is applied to that portion of the placement object 3 to which the primer 9 has been applied. In this application, the optical fiber 13 is positioned so as to lie in the portion where the primer 9 has been applied.

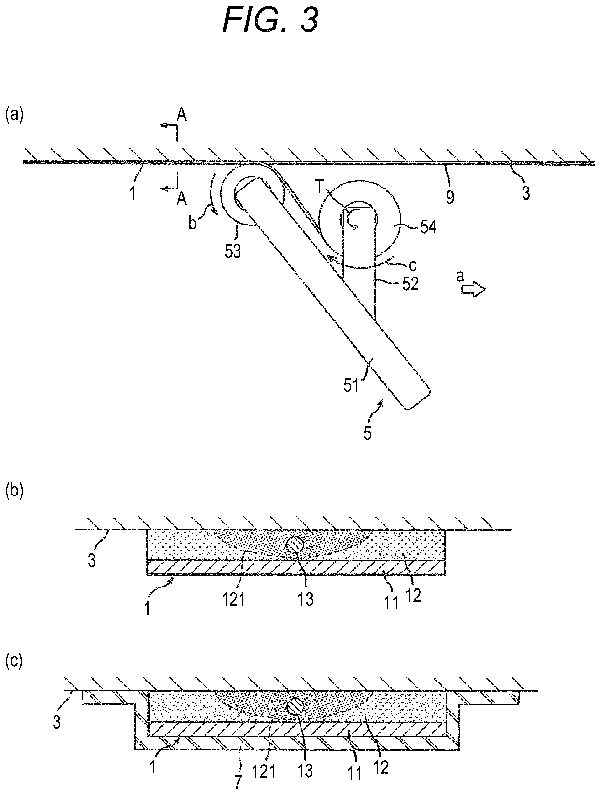

In this embodiment, the application device 5 illustrated in (a) of Fig. 3 is used for applying the optical-fiber-embedding sheet 1.

The application device 5 includes a main body 51, a fixing material 52, a press roller 53, a reel 54, etc. The main body 51 is a rod-shaped member and has the press roller 53 provided to an end portion thereof. The reel 54 includes the optical-fiber-embedding sheet 1 wound into a roll, and has been attached to a longitudinal-direction center portion of the main body 51 by the fixing material 52.

The worker grips the base end of the main body 51, which is the end portion on the side opposite from the press roller 53, and moves the application device 5 in the application direction of the optical-fiber-embedding sheet 1 shown by arrow "a" in (a) of Fig. 3 (the direction along which the optical-fiber-embedding sheet 1 is applied), while pressing the optical-fiber-embedding sheet 1 unwound from the reel 54 against the placement object 3 with the press roller 53.

In this operation, the press roller 53 and the reel 54 rotate within a plane orthogonal to the surface where the optical fiber 13 is being placed (i.e., the plane shown by (a) of Fig. 3), as shown by arrows b and c, respectively. Thus, the adhesive layer 12 of the optical-fiber-embedding sheet 1 unwound from the reel 54 is successively bonded to the placement object 3 with the press roller 53.

By setting the rotational resistance T of the reel 54 at an appropriate value, the application can be carried out while a certain initial tension derived from the rotational resistance T is being given to the optical fiber 13 of the optical-fiber-embedding sheet 1.

By applying the optical-fiber-embedding sheet 1 to the portion of the placement object 3 to which the primer 9 has been applied, the adhesive layer 12 is cured through a chemical reaction with the primer 9 to form a cured portion 121 of the adhesive layer 12 as shown in (b) of Fig. 3. The cured portion 121 is formed at least around the optical fiber 13. However, the range over which the cured portion 121 is formed varies depending on the application width and application amount of the primer 9, etc., and is not particularly limited.

By thus curing the adhesive layer 12, the optical fiber 13 is tenaciously fixed to the placement object 3 and is more highly integrated with the placement object 3.

In the case where the optical-fiber-embedding sheet 1 applied to the placement object 3 lies in an environment where the sheet 1 is exposed to sunlight, such as an outdoor environment, or where the optical-fiber-embedding sheet 1 is to be caused to lie in an environment where the sheet 1 is in contact with concrete, for example, by placing concrete on the lower surface of the placement object 3, then the optical-fiber-embedding sheet 1 may be covered with a covering material 7 as shown in (c) of Fig. 3.

In the former case, a material having ultraviolet resistance is used as the covering material 7. In the latter case, a material having alkali resistance is used as the covering material 7. The use of these materials is suitable for preventing the deterioration of the optical-fiber-embedding sheet 1.

In the manner described above, the optical fiber 13 is placed on the placement object 3. Thereafter, an end of the optical fiber 13 embedded in the adhesive layer 12 is taken out and connected to a measuring instrument (not shown) and a deformation of the placement object 3 is detected from a strain of the optical fiber 13.

Known as means for the examination are BOTDR (Brillouin optical time domain reflectometer), BOCDA (Brillouin optical correlation domain analysis), FBF (fiber Bragg grating), etc. Any of these means can be applied, and use may be made of an optical fiber 13 and a measuring instrument according to the means.

According to this embodiment described above, by bonding the optical-fiber-embedding sheet 1 to the placement object 3 with the adhesive layer 12, the labor required for placing an optical fiber 13 can be lessened and the placement can be rationally carried out by a small number of persons.

Furthermore, the base material 11 and adhesive layer 12 of the optical-fiber-embedding sheet 1 function as protective layers for the optical fiber 13 and the risk that the optical fiber 13 is damaged by external contacts during or after the placement can be reduced.

Moreover, since the optical fiber 13 has been embedded in the adhesive layer 12 and any sheet or the like does not lie between the optical fiber 13 and the placement object 3, a deformation of the placement object 3 is apt to be reflected in the results of an examination with the optical fiber 13, making it possible to favorably perform sensing. In addition, the layer configuration is simple and less costly.

In this embodiment, the adhesive layer 12 containing the optical fiber 13 embedded therein is cured by a reaction with the primer 9. The curing of the adhesive layer 12 enables the optical fiber 13 to be more highly integrated with the placement object 3 and be prevented from readily separating therefrom. The optical-fiber-embedding sheet 1 hence has improved durability.

Furthermore, in this embodiment, the use of the application device 5 in applying the optical-fiber-embedding sheet 1 not only further facilitates the operation of applying the optical-fiber-embedding sheet 1 to enable the application to be performed by only one person but also improves the application accuracy. In addition, since the application can be carried out while a certain initial tension is being given to the optical fiber 13 of the optical-fiber-embedding sheet 1, it is possible to introduce a certain initial strain into the optical fiber 13 throughout its entire length to prevent examination results from fluctuating.

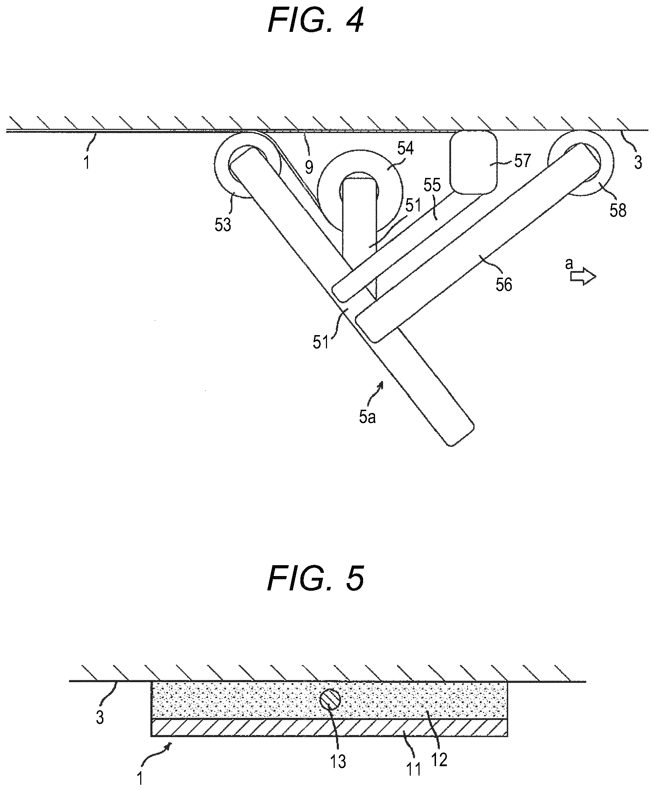

It is, however, possible to apply the optical-fiber-embedding sheet 1 without using the application device 5. Furthermore, the application device 5a illustrated in Fig. 4 can be used in place of the application device 5 described above.

The application device 5a shown in Fig. 4 has a configuration including the application device 5 and a primer applicator 57 added thereto, so that application of a primer 9 and application of the optical-fiber-embedding sheet 1 can be conducted by one operation. This application device 5a further lessens the labor required for the operation of placing the optical fiber 13.

The primer applicator 57 has been attached to the end of a support material 55 extending from a center portion of a main body 51 of the application device 5a. In the example shown in Fig. 4, an auxiliary roller 58 for helping the application device 5a in running has been further attached to the center portion of the main body 51 by a fixing material 56. The press roller 53, the primer applicator 57, and the auxiliary roller 58 are disposed in this order along the application direction "a" of the optical-fiber-embedding sheet 1.

The worker grips the base end of the main body 51, pushes the press roller 53, primer applicator 57, and auxiliary roller 58 into contact with a placement object 3, and moves the application device 5a in the application direction "a" of the optical-fiber-embedding sheet 1 while pressing the optical-fiber-embedding sheet 1 unwound from the reel 54 against the placement object 3 with the press roller 53. Thus, application of a primer 9 with the primer applicator 57 is conducted before application of the optical-fiber-embedding sheet 1, and a series of these operations can be carried out by a single person.

An expansion/contraction mechanism employing, for example, a spring may be provided to the support material 55. This causes the primer applicator 57 to follow the surface irregularities of the placement object 3, making it possible to always apply the primer 9 in a necessary amount.

In this embodiment, the adhesive layer 12 of the optical-fiber-embedding sheet 1 was cured with the primer 9 applied to the placement object 3. However, as shown in Fig. 5, the adhesive layer 12 of the optical-fiber-embedding sheet 1 may be bonded to the placement object 3 without application of the primer 9. In this case, there is no need of curing the adhesive layer 12 by a chemical reaction with the primer 9, and a conventionally known, ordinary pressure-sensitive adhesive can be used as the adhesive layer 12.

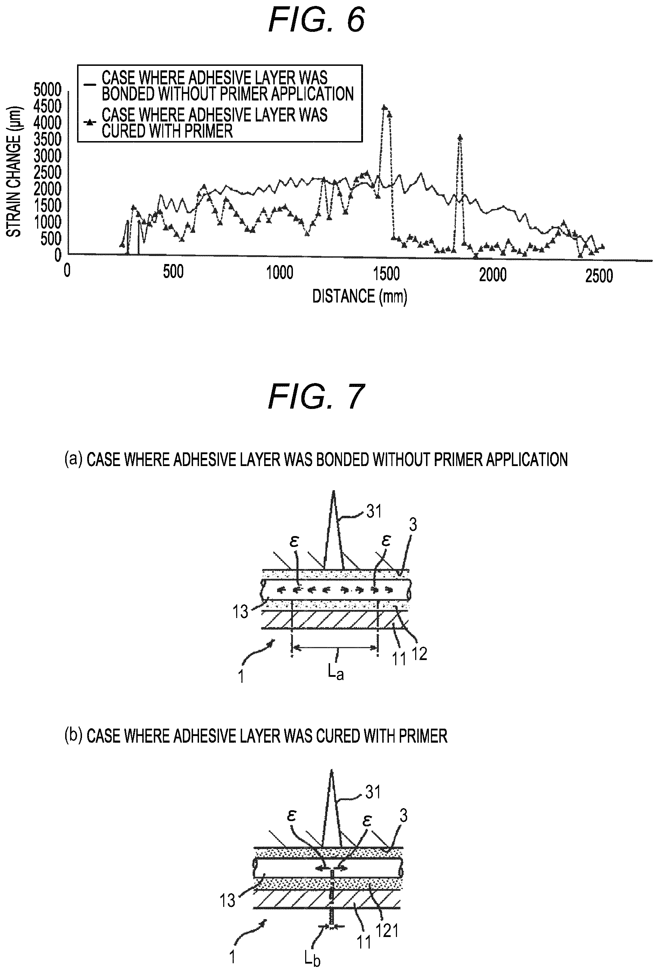

Fig. 6 shows results of examinations with the optical fiber 13 with respect to (a) the case where the adhesive layer 12 of the optical-fiber-embedding sheet 1 was bonded to the placement object 3 without application of the primer 9 and (b) the case where the adhesive layer 12 was cured with the primer 9; the abscissa indicates distance from a reference position in the optical fiber 13 and the ordinate indicates change (strain change) from an initial strain value of the optical fiber 13.

It can be seen from these graphs that in the case (b) where the adhesive layer 12 of the optical-fiber-embedding sheet 1 was cured with the primer 9, portions where the optical fiber 13 has suffered a strain due to a deformation of the placement object 3 can be more sharply detected.

The reasons therefor are explained using, as an example, a case where the placement object 3 has a crack 31 as shown in (a) of Fig. 7 and (b) of Fig. 7. In Fig. 7, (a) and (b) illustrate cross-sections along the longitudinal direction of the optical fiber 13.

In the case shown in (a) of Fig. 7, in which the adhesive layer 12 of the optical-fiber-embedding sheet 1 was bonded to the placement object 3 without application of the primer 9, the crack 31 of the placement object 3 is reflected in a strain ε (elongation) of the optical fiber 13 over a range of a certain length Lₐ where the position of the crack 31 is the center. In that range, the strain ε per unit length has been reduced to a small value.

Meanwhile, in the case shown in (b) of Fig. 7, in which the adhesive layer 12 was cured with the primer 9, the optical fiber 13 has been tenaciously fixed to the placement object 3 and, hence, the crack 31 of the placement object 3 is reflected only in a strain ε of the optical fiber 13 over a range of a small length L_{b} near the crack. Those portions of the optical fiber 13 which lie outside that range suffer no strain since these portions have been tenaciously fixed to the placement object 3. Because of this, the strain ε per unit length of the optical fiber 13 in the range of the length L_{b} has a large value and can be sharply detected.

Thus, by curing the adhesive layer 12, which contains the optical fiber 13 embedded therein, by a reaction with the primer 9, the optical fiber 13 is more highly integrated with the placement object 3, making it possible to sharply detect a deformation of the placement object 3.

It is, however, noted that there is a possibility that deformations which are minute and not problematic might be detected as noises, measured values might exceed a measurable range, or the optical fiber 13 might be damaged, and there are cases where it is desirable to bond the adhesive layer 12 to the placement object 3 without application of the primer 9, as shown in Fig. 5. The adhesive layer 12 bonded without the primer 9 is more apt to conform to surface irregularities of the placement object 3 and to deformations of the placement object 3.

Consequently, which method is to be employed may be decided in view of the purpose of measurement, the placement object 3, etc. Furthermore, the material, etc. of the adhesive layer 12 may be selected so that the rigidity of the cured portion 121, in the case where the adhesive layer 12 is cured with the primer 9, or the rigidity of the adhesive layer 12 itself, in the case where the adhesive layer 12 is not cured, is an appropriate value according to the purpose of measurement, the placement object, etc.

Although a pressure-sensitive adhesive is used as the adhesive layer 12 in this embodiment, the adhesive layer 12 is not limited thereto.

For example, a heat-curable material such as a known heat-curable resin can be used as the adhesive layer 12. In this case, the optical-fiber-embedding sheet 1 is pressed against the placement object 3 while the adhesive layer 12 of the optical-fiber-embedding sheet 1 is kept being heated with a heater. Thus, the optical fiber 13 can be tenaciously fixed to the placement object 3 by the cured adhesive layer 12, and the operation of applying the primer 9 is unnecessary.

The heater can be incorporated into, for example, the press roller 53 of the application device 5. However, the heater may be independent of the application device 5.

Also usable as the adhesive layer 12 is a water-curable material such as a known water-curable resin. In this case, the adhesive layer 12 cures naturally due to the atmospheric moisture.

The base material 11 also is not limited to the materials mentioned above, and may be a high-strength layer including a carbon-fiber sheet, an aramid sheet, or the like. Furthermore, a scale may be given to the base material 11 along the longitudinal direction so that how long the optical-fiber-embedding sheet 1 has been applied can be grasped.

Moreover, the configuration of the optical-fiber-embedding sheet is also not limited to those described above. For example, as in the optical-fiber-embedding sheet 1a shown in (a) of Fig. 8, an optical fiber 15 for use as a sensor for temperature measurement may be further embedded in the adhesive layer 12 besides the optical fiber 13. The optical fiber 15 is for determining a temperature distribution along the longitudinal direction thereof and is disposed in parallel with the optical fiber 13 along the longitudinal direction of the optical-fiber-embedding sheet 1a.

In the example shown in (a) of Fig. 8, a tube 14 is embedded in the adhesive layer 12 and the optical fiber 15 for temperature measurement is inserted into the tube 14. Thus, the optical fiber 15 and the adhesive layer 12 are physically separated from each other. The optical fiber 15 has an outer diameter smaller than an inner diameter of the tube 14, and the optical fiber 15 is prevented from having a strain, for example, by disposing the optical fiber 15 slightly loosely.

In this case, the results of an examination with the optical fiber 13 can be corrected with temperature using a longitudinal-direction temperature distribution of the optical fiber 15 determined with the optical fiber 15. Thus, any deformation of the placement object 3 can be detected more accurately.

Only the optical fiber 15, which is for temperature measurement, may be embedded in the adhesive layer 12. This case also has an advantage that since any sheet or the like does not lie between the optical fiber 15 and the placement object 3, the temperatures of portions near the placement object 3 are apt to be reflected in the results of an examination with the optical fiber 15.

According to the claimed invention, as in the optical-fiber-embedding sheet 1b shown in (b) of Fig. 8, a protective layer 17 is disposed between the base material 11 and the adhesive layer 12 to reduce the risk that the optical fiber 13 is damaged during or after the operation of placing the optical fiber 13. As the protective layer 17, use can be made of a pressure-sensitive adhesive having some degree of flexibility.

Moreover, as in the optical-fiber-embedding sheet 1c shown in (a) of Fig. 9, a wire 16 for sheet tearing which extends along the longitudinal direction of the optical fiber 13 may be embedded in the adhesive layer 12 in the vicinity of the optical fiber 13 in order to facilitate the operation of connecting the optical fiber 13 to a measuring instrument.

As the wire 16, steel or stainless-steel can, for example, be used. After the optical-fiber-embedding sheet 1c has been applied and, for example, before the adhesive layer 12 is completely cured with the primer 9, either an end of the wire 16 protrudent from a longitudinal-direction end of the optical-fiber-embedding sheet 1c or an end of the wire 16 taken out of the optical-fiber-embedding sheet 1c by cutting, for example, the base material 11 is pulled outward from the optical-fiber-embedding sheet 1c as indicated by arrow d in (a) of Fig. 9, i.e., toward the base material 11. As a result, the optical-fiber-embedding sheet 1c is torn as shown in (b) of Fig. 9 to render the inside optical fiber 13 easy to take out, making the operation of connecting to a measuring instrument easy.

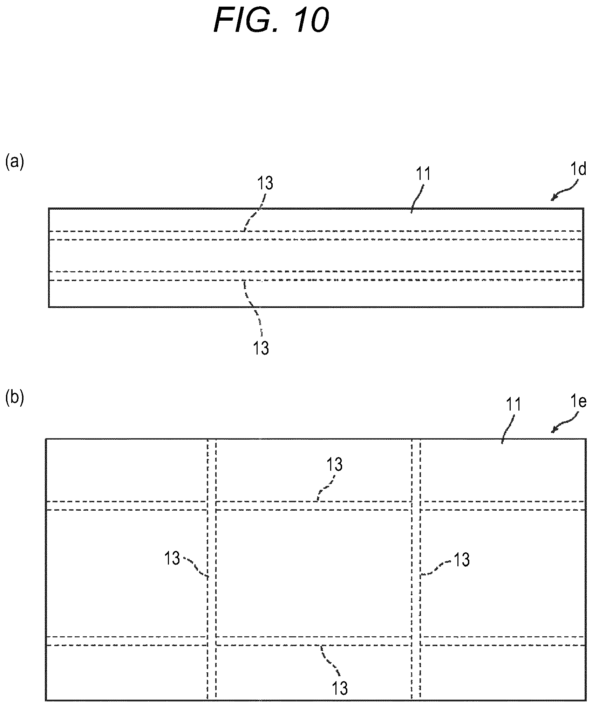

The number of optical fibers 13 is not limited to one. It is possible, as in the optical-fiber-embedding sheet 1d shown in (a) of Fig. 10, to dispose a plurality of (two in the example shown in the figure) optical fibers 13 in parallel with each other along the longitudinal direction of the optical-fiber-embedding sheet 1d.

In this case, even when one optical fiber 13 breaks, the examination can be continued using the other optical fiber 13. Hence, a risk that a fiber breakage makes the examination impossible is reduced.

In cases when, for example, an examination by BOCDA is conducted, it is possible to connect ends, on the same side, of two optical fibers 13 to each other with an optical connector (not shown) to easily configure a round-trip circuit of the optical fibers 13 which is necessary for the examination.

The optical fibers 13 are not limited to ones disposed so as to extend in one direction only. As in the optical-fiber-embedding sheet 1e shown in (b) of Fig. 10, a plurality of optical fibers 13 may be incorporated so as to extend in different directions.

In the example shown in (b) of Fig. 10, optical fibers 13 have been disposed along two directions orthogonal to each other in the plane of the sheet. This example is capable of simultaneously performing examinations for the two directions. In a construction field, it is difficult to accurately dispose optical fibers along a plurality of directions. However, if the optical-fiber-embedding sheet 1e into which optical fibers 13 extending in a plurality of directions have been incorporated beforehand is used, it is possible to place optical fibers 13 extending accurately in desired directions.

### INDUSTRIAL APPLICABILITY

The present invention can provide an optical-fiber-embedding sheet, etc. which can lessen labor required for an operation for optical-fiber placement and with which sensing can be favorably conducted at low cost.

While preferred embodiments of the present invention have been described with reference to the accompanying drawings, the present invention is not limited to the embodiments, but defined by the appended claims.

Constituent elements of the embodiments described above may be combined at will unless the combinations depart from the scope of the claims.

This application is based on a Japanese patent application filed on March 23, 2020 (Application No. 2020-051024).

### REFERENCE SIGNS LIST

1, 1a, 1b, 1c, 1d, 1e: Optical-fiber-embedding sheet
3: Placement object
5, 5a: Application device
7: Covering material
9: Primer
11: Base material
12: Adhesive layer
13, 15: Optical fiber
14: Tube
16: Wire
17: Protective layer
31: Crack
51: Main body
52, 56: Fixing material
53: Press roller
54: Reel
55: Support material
57: Primer applicator
58: Auxiliary roller
121: Cured portion

## Claims

1. An optical-fiber-embedding sheet (1b) which is a sheet into which an optical fiber (13) for use as a sensor has been incorporated, comprising
a base material (11) and
an adhesive layer (12) formed thereover which is to be bonded to a placement object (3) where the optical fiber is to be placed,
the optical fiber having been embedded in the adhesive layer,
**characterized in that** the optical-fiber-embedding sheet includes a protective layer (17) disposed between the base material (11) and the adhesive layer (12).

2. The optical-fiber-embedding sheet according to claim 1, **characterized by** including a wire (16) for sheet tearing provided to the adhesive layer (12).

3. A method for placing an optical fiber, **characterized by** applying the optical-fiber-embedding sheet (1b) according to claim 1 or 2 to the placement object (3) by means of the adhesive layer (12).

4. The method for placing an optical fiber according to claim 3, **characterized in that** a primer (9) for curing the adhesive layer (12) by a chemical reaction with the adhesive layer is applied to the placement object (3) and thereafter the optical-fiber-embedding sheet (1b) is applied to a portion of the placement object to which the primer has been applied.

5. The method for placing an optical fiber according to claim 3 or 4, **characterized by** using an application device (5, 5a) which includes a reel (54) having the optical-fiber-embedding sheet (1) wound thereon and a press roller (53) and applying the optical-fiber-embedding sheet by unwinding the optical-fiber-embedding sheet from the reel and moving the application device in a direction (a) along which the optical-fiber-embedding sheet is applied, while pressing the unwound optical-fiber-embedding sheet (1) against the placement object (3) with the press roller (53).

6. An application device (5, 5a) for applying the optical-fiber-embedding sheet (1b) according to any one of claim 1 or 2 to the placement object (3),
**characterized by** including
a reel (54) having the optical-fiber-embedding sheet wound thereon and
a press roller (53) for pressing the optical-fiber-embedding sheet unwound from the reel against the placement object.

7. The application device for applying the optical-fiber-embedding sheet according to claim 6, **characterized by** including a primer applicator (57) for applying a primer (9) and an auxiliary roller (58) for helping the application device (5a) in running, wherein the press roller (53), the primer applicator (57) and the auxiliary roller (58) are disposed in this order along an application direction (a) of the optical-fiber-embedding sheet (1).

## Patentansprüche

1. Optische Faser-Einbettungsfolie (1b), welche eine Folie ist, in die eine optische Faser (13) zur Verwendung als ein Sensor eingearbeitet wurde, umfassend
ein Grundmaterial (11) und
eine darauf ausgebildete Haftschicht (12), die an ein Platzierungsobjekt (3) gebunden werden soll, wo die optische Faser platziert werden soll,
wobei die optische Faser in die Haftschicht eingebettet wurde,
**dadurch gekennzeichnet, dass** die optische Faser-Einbettungsfolie eine Schutzschicht (17) beinhaltet, die zwischen dem Grundmaterial (11) und der Haftschicht (12) angeordnet ist.

2. Optische Faser-Einbettungsfolie nach Anspruch 1, **gekennzeichnet durch** das Beinhalten eines Drahts (16) zum Zerreißen der Folie, der an der Haftschicht (12) bereitgestellt ist.

3. Verfahren zum Platzieren einer optischen Faser, **gekennzeichnet durch** das Aufbringen der optischen Faser-Einbettungsfolie (1b) nach Anspruch 1 oder 2 auf das Platzierungsobjekt (3) mittels der Haftschicht (12).

4. Verfahren zum Platzieren einer optischen Faser nach Anspruch 3, **dadurch gekennzeichnet, dass** eine Grundierung (9) zum Härten der Haftschicht (12) durch eine chemische Reaktion mit der Haftschicht auf das Platzierungsobjekt (3) aufgebracht wird und anschließend die optische Faser-Einbettungsfolie (1b) auf einen Abschnitt des Platzierungsobjekts aufgebracht wird, auf den die Grundierung aufgebracht wurde.

5. Verfahren zum Platzieren einer optischen Faser nach Anspruch 3 oder 4, **gekennzeichnet durch** das Verwenden einer Aufbringungsvorrichtung (5, 5a), die eine Rolle (54), auf die die optische Faser-Einbettungsfolie (1) aufgewickelt ist, und eine Andruckrolle (53) beinhaltet, und das Aufbringen der optischen Faser-Einbettungsfolie durch Abwickeln der optischen Faser-Einbettungsfolie von der Rolle und Bewegen der Aufbringungsvorrichtung in eine Richtung (a), entlang der die optische Faser-Einbettungsfolie aufgebracht wird, während die abgewickelte optische Faser-Einbettungsfolie (1) mit der Andruckrolle (53) gegen das Platzierungsobjekt (3) gedrückt wird.

6. Aufbringungsvorrichtung (5, 5a) zum Aufbringen der optischen Faser-Einbettungsfolie (1b) nach einem der Ansprüche 1 oder 2 auf das Platzierungsobjekt (3), **gekennzeichnet durch** das Beinhalten einer Rolle (54), auf die die optische Faser-Einbettungsfolie aufgewickelt ist, und einer Andruckrolle (53) zum Andrücken der von der Rolle abgewickelten optischen Faser-Einbettungsfolie gegen das Platzierungsobjekt.

7. Aufbringungsvorrichtung zum Aufbringen der optischen Faser-Einbettungsfolie nach Anspruch 6, **gekennzeichnet durch** das Beinhalten eines Grundierungsaufbringers (57) zum Aufbringen einer Grundierung (9) und einer Hilfsrolle (58) zum Unterstützen der Aufbringungsvorrichtung (5a) beim Laufen, wobei die Andruckrolle (53), der Grundierungsaufbringer (57) und die Hilfsrolle (58) in dieser Reihenfolge entlang einer Aufbringungsrichtung (a) der optischen Faser-Einbettungsfolie (1) angeordnet sind.

## Revendications

1. Feuille intégrant une fibre optique (1b) qui est une feuille dans laquelle une fibre optique (13) destinée à être utilisée en tant que capteur a été incorporée, comprenant
un matériau de base (11) et
une couche adhésive (12) formée sur lui qui doit être assemblée à un objet de placement (3) où la fibre optique doit être placée,
la fibre optique ayant été intégrée dans la couche adhésive,
**caractérisée en ce que**
la feuille intégrant une fibre optique inclut une couche protectrice (17) disposée entre le matériau de base (11) et la couche adhésive (12).

2. Feuille intégrant une fibre optique selon la revendication 1, **caractérisée par** le fait d'inclure un fil métallique (16) pour le déchirement de feuille prévu sur la couche adhésive (12).

3. Procédé de placement d'une fibre optique, **caractérisé par** le fait d'appliquer la feuille intégrant une fibre optique (1b) selon la revendication 1 ou 2 sur l'objet de placement (3) au moyen de la couche adhésive (12).

4. Procédé de placement d'une fibre optique selon la revendication 3, **caractérisé en ce qu'**une couche primaire (9) pour durcir la couche adhésive (12) par une réaction chimique avec la couche adhésive est appliquée sur l'objet de placement (3) et la feuille intégrant une fibre optique (1b) est ensuite appliquée à une portion de l'objet de placement sur laquelle la couche primaire a été appliquée.

5. Procédé de placement d'une fibre optique selon la revendication 3 ou 4, **caractérisé par** le fait d'utiliser un dispositif d'application (5, 5a) qui inclut une bobine (54) ayant la feuille intégrant une fibre optique (1) enroulée sur elle et un rouleau presseur (53), et d'appliquer la feuille intégrant une fibre optique en déroulant la feuille intégrant une fibre optique de la bobine et déplaçant le dispositif d'application dans une direction (a) le long de laquelle la feuille intégrant une fibre optique est appliquée tout en pressant la feuille intégrant une fibre optique déroulée (1) contre l'objet de placement (3) avec le rouleau presseur (53).

6. Dispositif d'application (5, 5a) pour l'application de la feuille intégrant une fibre optique (1b) selon l'une quelconque de la revendication 1 ou 2 sur l'objet de placement (3), **caractérisé par** le fait d'inclure une bobine (54) ayant la feuille intégrant une fibre optique enroulée sur elle et un rouleau presseur (53) pour presser la feuille intégrant une fibre optique déroulée de la bobine contre l'objet de placement.

7. Dispositif d'application pour l'application de la feuille intégrant une fibre optique selon la revendication 6, **caractérisé par** le fait d'inclure un applicateur de couche primaire (57) pour appliquer une couche primaire (9) et un rouleau auxiliaire (58) pour aider le dispositif d'application (5a) à fonctionner, dans lequel le rouleau presseur (53), l'applicateur de couche primaire (57) et le rouleau auxiliaire (58) sont disposés dans cet ordre le long d'une direction d'application (a) de la feuille intégrant une fibre optique (1).
